# EUROPEAN PATENT APPLICATION

(11) **EP 4 637 087 A1**
(43) Date of publication of application: **22.10.2025**
(21) Application number: 25169554.0
(22) Date of filing: 09.04.2025
(51) Int. Cl.: H04L 12/40, G05B 19/02, B60W 20/00

(54) **ZONE ORIENTED CONTROL SYSTEM FOR A VEHICLE AND CORRESPONDING CONTROL METHOD**

(30) Priority: 15.04.2024 IT 202400008527
(71) Applicant: Marelli Europe S.p.A., 20011 Corbetta (MI) (IT)
(72) Inventor: MAGLIO, Gianluca, I-20011 Corbetta (Milano) (IT); GARCIA VALVERDE, Williams Richard, I-20011 Corbetta (Milano) (IT)
(74) Representative: Buzzi, Notaro & Antonielli d'Oulx S.p.A.

(57) **Abstract**

A control system for a vehicle comprising a vehicle network (30) which is configured to exchange data with a plurality of zone controllers (40a, 40b) configured to control respective modules, in particular sensors (47) and/or actuators (76), operating in respective zones of said vehicle, wherein each zone controller (40) comprises:
- a microcontroller (41),
- a master control unit (42), and/or
- a slave control unit (43),
wherein at least a first zone controller (40a) in said plurality of zone controllers (40a, 40b) comprises a respective master control unit (42) coupled by means of a communication link, in particular a serial bus (32), to a slave control unit (43) of a second zone controller (40b) in said plurality of zone controllers (40a, 40b), and it is configured to send instructions from said first zone controller (40a), in particular data read/write requests, to said second zone controller (40b) on said communication link, in particular serial bus, (32), wherein the second zone controller (40b) is configured to receive and execute said instructions, in particular data read/write requests, by means of the respective slave control unit (43).

## Description

### Technical field

The description relates to zone-oriented control systems, or control architectures, for vehicles and a corresponding control method.

### Technological background

In the automotive sector, decentralized architectures are a type of E/E (Electrical/Electronic) architecture in which the implemented functionalities are distributed among a large number of interconnected ECUs (Electronic Control Units). In such architectures, each ECU is able to process its own data and communicate with other ECUs to implement advanced vehicle functionality. At present, there are many vehicles comprising a large number of ECUs and their number is set to increase, since in decentralized architectures there is usually a one-to-one association between vehicle functions and ECUs. Decentralized E/E architectures are widely used due to their ease of integration, physical separation of components from different subsystems and their repairability.

However, decentralized E/E architectures suffer from scalability problems when used to build complex electrical and electronic systems, such as systems required by BEV (Battery Electric Vehicle) or PHEV (Plug-in Hybrid Electric Vehicle) vehicles modern. In general, these problems include increased costs, complex wiring harnesses, software fragmentation, and security flaws.

For this reason, various architectures have been proposed, such as domain architecture, zone architecture and service-oriented architecture. In particular, an Automotive Zone Controller (AZC) is an electronic device that manages and controls various functions and devices within a specific zone of a vehicle, such as the front, rear, left, and rear right or middle. Thus, AZC is part of the new electronic vehicle architectures needed for the vehicle defined by the software, which aims to reduce the complexity, cost and weight of wiring harnesses and components while increasing performance, the flexibility and scalability of vehicle systems.

An AZC, Automotive Zone Controller, or simply ZC, Zone Controller, acts as a hub that couples the sensors, actuators, and peripherals of a zone to a central processing unit using high-speed interfaces, such as Ethernet or CAN-FD. An AZC also manages energy distribution in an area, using switches and solid-state relays.

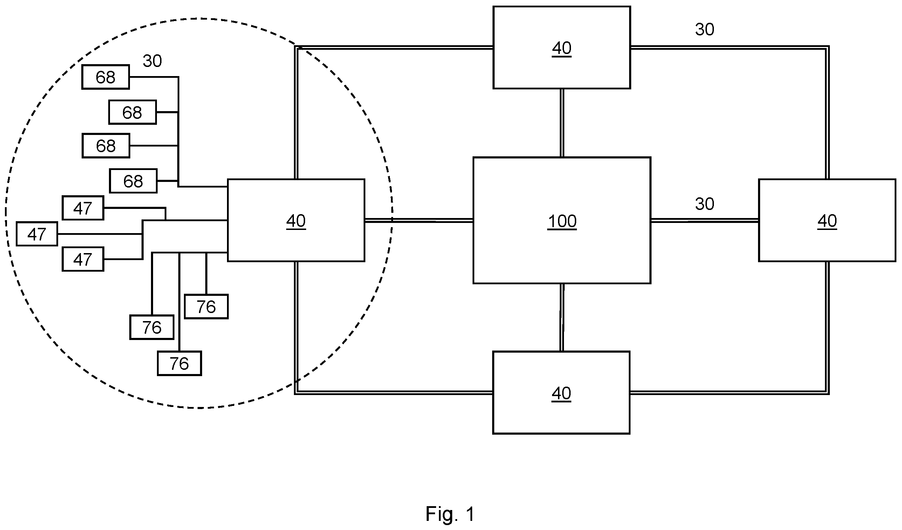

An example of an automotive E/E zone architecture is shown in Figure 1. In particular, the architecture illustrated comprises a plurality of zone controller ECUs 40, with a plurality of automotive ECUs connected based on the proximity criteria. Each zone controller 40 provides multi-domain functionalities i.e., functionalities belonging to different functional areas of the vehicle, such as body, powertrain, chassis, lighting, etc., that in a traditional decentralized E/E architecture would be implemented in separate ECUs. Conversely, such multi-domain functionalities are converging into a respective multi-domain zone controller ECU 40. In such E/E architecture, zone controller ECUs 40 are coupled with each other by means of a vehicle network 30, which can be implemented using, for instance, automotive Ethernet, CAN, CAN-FD, etc. As illustrated, each zone controller 40 can be coupled to sensors 47, actuators 76, or other ECUs 68 based on proximity criteria in order to reduce cable connections. Moreover, each zone controller 40 is connected through the vehicle network 30 to a central controller 100, whose role is to manage the several zone controllers 40 coupled to the vehicle network 30, in particular to manage the communications and the exchange of data between the different components of the E/E architecture. Thus, the central controller 100 acts as a pivotal hub, orchestrating communication between the zone controllers 40 and the various components coupled to them, such as the sensors 47, and the actuators 76 within the E/E zone architecture.

Zone controllers allow loads, such as lights, motors, and actuators, and sensors within a specific zone to communicate directly with each other. This localized communication stream enhances efficiency, reduces latency, and improves overall responsiveness. The zone architecture therefore has several advantages over conventional vehicle electronic architectures, such as reduced complexity, increased performance, and greater flexibility.

In fact, the zone architecture reduces the number of wires, connectors and control units in a vehicle, simplifying production and assembly processes and improving the quality and reliability of vehicle systems. The zone architecture also enables faster and safer data transmission and processing in a vehicle, improving the functionality and safety of vehicle systems such as ADAS, infotainment, lighting and HVAC.

Furthermore, the zone architecture allows greater customization of vehicle systems, as well as greater adaptability and scalability to changes and updates of software and hardware, allowing the vehicle defined by the software to be built.

However, while zone architectures offer benefits, they also introduce vulnerabilities. The loss of a single zone controller potentially results in the failure of multiple vehicle functions associated with that zone. For instance, if the rear zone controller malfunctions, it could impact brake lights, reverse sensors, and other safety features. Despite this, certain functions must continue to operate even when a zone controller fails, such as sensor readings, since sensors must provide accurate data for critical systems, and load actuation, as essential loads such as brake lights must still function.

In fact, in such E/E architectures a sensor may be distant from its respective actuator, or vice versa, or sensors and/or actuators may be placed far from the respective zone controller ECU responsible for data processing and decisions. In this scenario, with a plurality of sensors, actuators and ECUs coupled to one zone controller, the impact of loss or degradation of one zone controller may thus tackle the operability and safety of the vehicle functions. Therefore, the possibility to implement fallback solutions is a key to ensure safety and mission-critical functionalities.

As is well known, safety-critical functions, including braking and airbags, cannot afford to fail due to a single zone controller malfunction. Ensuring fail-safe communication and load actuation remains paramount. To this end, hence to mitigate the impact of a failed zone controller, redundancy mechanisms are necessary. However, introducing redundancy may lead to the reintroduction of long harnesses and cables, partially negating the benefits of zonal architectures. Therefore, achieving the right balance between harness simplification and redundancy is crucial. In fact, while zonal architectures reduce complexity, excessive redundancy can compromise the overall system.

In summary, zone architectures represent a step forward in vehicle design, but they require careful consideration, in particular for facing the pressing need of optimizing the above-mentioned trade-offs while maintaining the benefits of simplified harnesses and improved functionality. As vehicles become more interconnected, finding the right equilibrium between efficiency and reliability remains a critical challenge.

### Object and summary

An object of one or more embodiments is to contribute in providing solutions which allow to provide increased safety for mission critical applications while retaining the advantages of the zone-oriented E/E architecture.

According to one or more embodiments, that object is achieved via a control system for a vehicle having the features set forth in the claims that follow. The object is achieved also via a corresponding control method.

The claims are an integral part of the technical teaching provided in respect of the embodiments.

Solutions as described herein include a control system for a vehicle comprising a vehicle network which is configured to exchange data with a plurality of zone controllers configured to control respective modules, in particular sensors and/or actuators, operating in respective zones of the vehicle, wherein each zone controller comprises:
- a microcontroller,
- a master control unit, and/or
- a slave control unit,
wherein at least a first zone controller in the plurality of zone controllers comprises a respective master control unit coupled by means of a communication link, in particular a serial bus, to a slave control unit of a second zone controller in the plurality of zone controllers, and it is configured to send instructions from the first zone controller, in particular data read/write requests, to the second zone controller on the communication link, in particular serial bus, wherein the second zone controller is configured to receive and execute the instructions, in particular data read/write requests, by means of the respective slave control unit.

In various embodiments, the control system comprises a central controller coupled to the vehicle network, and wherein each zone controller is coupled to the vehicle network and is configured to transmit and receive data over the vehicle network, the central controller being configured to manage the exchange of data between the zone controllers.

In various embodiments, the first zone controller, upon detecting that the microcontroller of the second zone controller is malfunctioning, is configured to send instructions to the second zone controller.

In various embodiments, each slave control unit comprises:
- one or more analog-to-digital converters, and/or
- one or more digital-to-analog converters, and/or
- one or more driving circuits.

In various embodiments, each zone controller is coupled to one or more sensors and/or to one or more actuators, the one or more analog-to-digital converters reading values from the one or more sensors, and the one or more digital-to-analog converters sending signals to the one or more actuators.

In various embodiments, the master control unit and the slave control unit respectively comprise a master transceiver and a slave transceiver, the master transceiver and the slave transceiver being coupled to the communication link, in particular serial bus, and being configured to receive and transmit data over the communication link, in particular serial bus.

In various embodiments, one or more zone controllers are linked to the first zone controller and to the second zone controller by means of further serial buses linking respective master control units to corresponding slave control units.

In various embodiments, the first zone controller comprises a plurality, in particular a pair, of master control units respectively coupled to corresponding slave control units provided in the second zone controller by means of respective serial buses.

In various embodiments, the control system further comprises at least a third zone controller having a slave control unit, the communication link, in particular serial bus, being split in two branches respectively coupled to the slave control unit of the second zone controller and to the slave control unit of the third zone controller.

In various embodiments, one or more zone controllers in the plurality comprise a master control unit and a slave control unit.

Solutions as described herein refer also to a method for controlling modules in a vehicle comprising a vehicle network exchanging data with a plurality of zone controllers configured to control respective modules, in particular sensors and/or actuators, operating in respective zones of the first vehicles, each zone controller comprising:
- a microcontroller,
- a master control unit, and/or
- a slave control unit,
comprising sending instructions from the first zone controller, in particular data read/write requests, to a second zone controller in the plurality of zone controllers through a respective master control unit coupled by means of a serial bus to a slave control unit of a second zone controller in the plurality of zone controllers.

In various embodiments, upon detecting that the microcontroller of the second zone controller is malfunctioning, is performed the sending instructions, in particular data read/write requests, from the first zone controller to the second zone controller.

### Brief description of the drawings

Embodiments of the present disclosure will now be described with reference to the annexed drawings, which are provided purely by way of non-limiting example and in which:
- Figure 1 has been described in the foregoing;
- Figure 2 shows a plurality of zone controllers interconnected through a serial IO link in accordance with the solution here described;
- Figure 3 shows two zone controllers interconnected through a serial IO link and connected to the vehicle network in accordance with the solution here described;
- Figure 4 shows two zone controllers interconnected through a serial IO link and connected to the vehicle network in accordance with the solution here described;
- Figure 5 shows a master control unit and a slave control unit coupled through a serial bus in accordance with the solution here described;
- Figure 6a and Figure 6b show respective exemplary configurations of two pairs of zone controllers interconnected through serial IO connections in accordance with the solution here described;
- Figure 7 shows an exemplary configuration of three zone controllers interconnected through serial IO connections in accordance with the solution here described;
- Figure 8 shows an exemplary configuration of four zone controllers interconnected through serial IO connections in accordance with the solution here described;
- Figure 9 shows an exemplary configuration of two zone controllers interconnected through multiple serial IO connections in accordance with the solution here described;
- Figure 10 shows an exemplary configuration of three zone controllers interconnected through a duplexed serial IO connection in accordance with the solution here described.

### Detailed description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

As mentioned before, various embodiments of the present disclosure provide solutions for data sensing and actuation applicable to an automotive zone architecture.

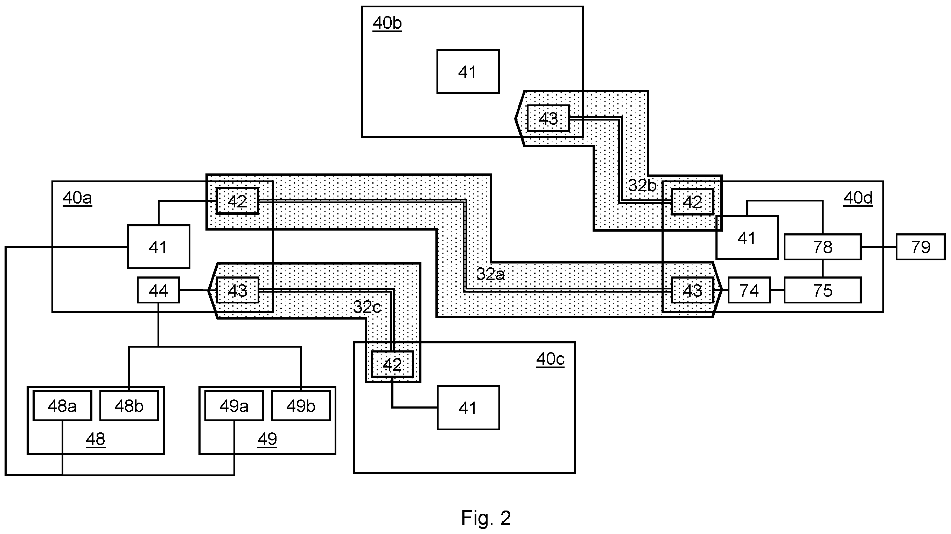

To this purpose, in Figure 2 is illustrated an automotive zone control architecture, or control system, comprising a plurality of zone controllers, in particular four different zone controllers 40 i.e., a first zone controller 40a, a second zone controller 40b, a third zone controller 40c, and a fourth zone controller 40d. For example, the four zone controllers 40 may be positioned in different areas of a vehicle, corresponding for instance to a front zone controller 40a, a right zone controller 40b, a left zone controller 40c, and a rear zone controller 40d.

As illustrated, the front zone controller 40a comprises a microcontroller 41 which can be configured to implement several functionalities occurring at the front zone of the vehicle. For example, the microcontroller 41 can be configured to acquire readings from one or more sensors provided externally with respect to the front zone controller 40a such as, for instance, a throttle pedal 48 or a brake pedal 49. To this end, the microcontroller 41 includes an analog to digital converter to acquire the values from the sensors.

As illustrated, the throttle pedal 48 and the brake pedal 49 may include redundant sensors, respectively labeled as 48a and 48b for the throttle pedal, and as 49a and 49b for the brake pedal, in order to guarantee a fail-safe operativity of such mission critical components. Specifically, in each pair of redundant sensors, such as the sensors 48a and 48b, and the sensors 49a and 49b, are connected to different circuits in order to guarantee the fail-safe operativity. In the example considered, the primary throttle pedal 48a and the primary brake pedal 49a are coupled to the microcontroller 41 of the front zone controller 40a, whereas the secondary throttle pedal 48b and the secondary brake pedal 49b are coupled to further circuits for providing fails-safe operativity, that will be described in the following.

Similarly, the rear zone controller 40d comprises a microcontroller 41 which can be configured to implement several functionalities occurring at the rear zone of the vehicle. Specifically, in the example shown in Figure 2, the rear zone controller 40d is configured to drive a plurality of stop lights 79, provided externally with respect to the rear zone controller 40d, as a function of the brake pedal 49. As known per se, in a vehicle the stop lights shall activate in response to the brake pedal being pressed. To this end, in the example considered the rear zone controller 40d includes a high side driver 78, coupled to the microcontroller 41 and to the stop lights 79. In particular, the microcontroller 41 of the rear zone controller 40d includes a digital to analog converter in order to provide an analog driving signal to the driving circuit 78.

Therefore, in the example considered, whenever a user presses the brake pedal 49, the microcontroller 41 provided in the front zone control unit 40a senses the pressure of the brake pedal 49, preferably by means of the its integrated analog to digital converter, and sends a signal to the microcontroller 41 of the rear zone controller 40d by means of a vehicle network 30, not shown in Figure 2 for convenience. The rear zone controller 40d, upon receiving the signal, drives the high side driver 78 by means of the respective microcontroller 41, in particular through its integrated DAC, and, subsequently, the high side driver 78 activates the stop lamps 79.

However, it may happen that one or more microcontrollers cease to function, thus compromising the functionality of the respective zone controllers. For example, with reference made to Figure 2, it may happen that the microcontroller 41 provided in the rear zone control unit 40d ceases to operate, thus causing an anomaly in the activation of the stop lamps 79. In mission-critical applications, such as the one depicted in the present example, it is important to provide a fail-safe mechanism that guarantees the activation of the stop lights 79 also in case of faults.

To this purpose, the front zone controller 40a comprises a master control unit 42 coupled to a slave control unit 43 provided in the rear zone controller 40d by means of a communication link embodied by a serial bus 32a and thus arranged to form a serial I/O network.

Such serial I/O network can be employed when data cannot be transmitted and/or received over the main vehicle network 30 due to a fault occurring in one or more zone controllers, in particular in a respective microcontroller 41. Specifically, a limp home circuit, or fail-safe circuit, 75 is provided in the rear zone controller 40d, in such a way that when the respective microcontroller 41 is unavailable due to a fault, the limp home circuit 75 can execute operations e.g., actuations, in place of the microcontroller 41. Limp home or limp mode indicates defining safe operational parameters for the vehicle when a fault is detected, in the case of the solution here described this for instance refers to using specific communication links e.g., serial network between the zone controllers, i.e., operating in a fail-safe manner.

In order to perform operations involving sensors 47, such as the throttle pedal 48 or the brake pedal 49, and/or actuators 76, such as the stop lamps 79, a further analog to digital converter, ADC, 44 is provided in the front zone controller 40a, and a further digital to analog converter, DAC, 74 is provided in the rear zone controller 40d. Accordingly, the ADC 44 of the front zone controller 40a is coupled to the sensors 47, in particular to the secondary sensor of the throttle pedal 48b and to the secondary sensor of the brake pedal 49b.

In particular, in the example considered the limp home circuit 75 is configured to read signals originating from the front zone controller 40a and to drive the stop lamps 79 by means of the DAC 74 and the high side driver 78 accordingly. In various embodiments, the limp home circuit 75 may be provided externally to the zone controller 40d. As anticipated, such configuration serves as an additional system for performing mission-critical operations, such as the activation of the stop lights 79 considered in the example and thus provide increased safety.

As shown in Figure 2, such configuration may be provided in several zone controllers, such as the right zone controller 40b or the left zone controller 40c. In particular, in the example shown the right zone controller 40b comprises a slave control unit 43 coupled to a master control unit 42 provided in the rear zone controller 40d by means of a serial bus 32b, whereas the left zone controller 40c comprises a master control unit 42 coupled to a slave control unit 43 provided in the front zone controller 40a by means of a serial bus 32c.

As illustrated, the master control units 42 of each zone controller are coupled to the respective microcontroller 41, whereas the slave control units 43 are preferably not coupled or not directly coupled to the respective microcontroller, i.e. the slave control unit 43 may not be coupled to the respective microcontroller 41, but in embodiments an indirect coupling through a chain of other components or objects may be present.

Thus, by using such exemplary configuration, the E/E architecture of the vehicle achieves a better degree of safety thanks to the redundancy.

In fact, in case the front zone microcontroller 41 fails, the functionalities of the front zone controller 40a can still be provided thanks to the slave control unit 43 which is configured to receive instructions, in particular data read/write requests, from the master control unit 42 of the left zone controller 40c through a serial bus 32c. Similarly, the functionalities related to the right zone controller 40b can still be provided in case its respective microcontroller 41 fails, thanks to the respective slave control unit 43 configured to receive instructions from the master control unit 42 of the rear zone controller 40d through a serial bus 32a.

In general, such configuration enables the sharing of peripherals, which may be either sensors 47 or actuators 76, among the various zone controllers provided in the vehicle through a dedicated serial bus 32, thus providing a safer architecture tailored for mission-critical applications which can operate independently from the vehicle network 30.

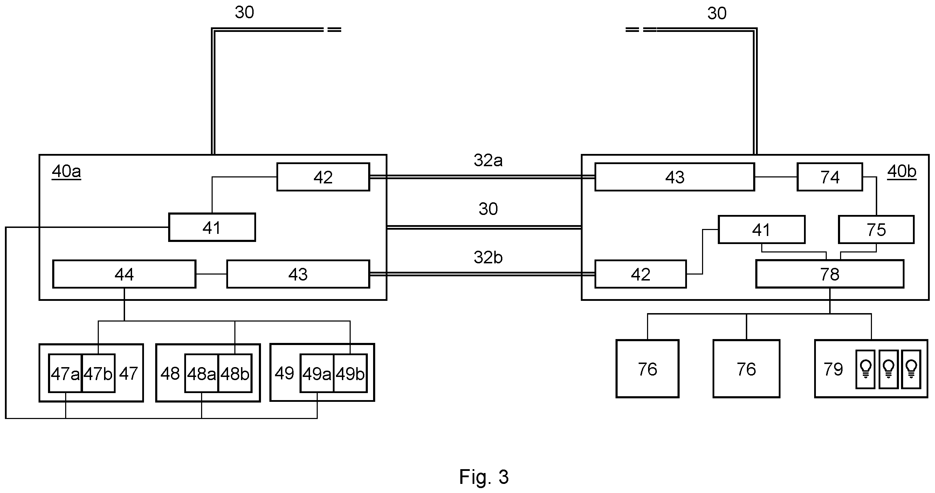

For the sake of simplicity, each coupling of one master control unit 42 to one slave control unit 43 through a serial bus 32 will be referred at as an additional serial IO (Input/Output) link in the following of the present description, additional indicating that this communication link between zone controllers implements an additional, in particular redundant, link to the sensors or actuators, in the redundant system for performing mission-critical operations. In Figure 3 a further exemplary embodiment of the present solution is illustrated.

In accordance with the present solution, a first zone controller 40a comprises a microcontroller 41 coupled to a master control unit 42, a slave control unit 43, and a data acquisition circuit 44 coupled to the slave control unit 43. In various embodiments, the data acquisition circuit 44 may be an ADC, such as a flash ADC or a delta-sigma converter.

Similarly, a second zone controller 40b comprises a microcontroller 41 coupled to a master control unit 42 and to a driving circuit 78, a slave control unit 43 coupled to a digital to analog converter, coupled in turn to a limp home circuit, or fail-safe circuit 75.

As illustrated, the first zone controller 40a is coupled to the second zone controller 40b through the vehicle network 30, which is employed when both the first zone controller 40a and the second zone controller 40b operate without anomalies. Additionally, a first serial bus 32b couples the master control unit 42 of the second zone controller 40b to the slave control unit 43 of the first zone controller 40a.

Similarly, a serial bus 32a couples the master control unit 42 of the first zone controller 40a to the slave control unit 43 of the second zone controller 40b. Thus, the microcontroller 41 of the second zone controller 40b can perform operations directed to peripherals coupled to the first zone controller 40a, even in the event that the microcontroller 41 of the first zone controller 40a fails.

Thus, with the configuration shown in Figure 3 the microcontroller 41 of the first zone controller 40a can perform operations, such as reading data from sensors or driving actuators, directed to peripherals coupled to the second zone controller 40b, even in the event that the microcontroller 41 of the second zone controller 40b fails.

As illustrated, the data acquisition circuit 44 of the first zone controller 40a is coupled to a plurality of sensors including a throttle pedal 48, a brake pedal 49, and other sensors 47, whereas the driving circuit 78 of the second zone controller 40b is coupled to a plurality of actuators including a plurality of brake lamps 79 and other generic loads 76. In particular, the data acquisition circuit 44 of the first zone controller 40a is coupled to the respective secondary sensors of the throttle pedal 48b, and of the brake pedal 49b, while the microcontroller 41 of the first zone controller 40a is coupled to the primary sensors of the throttle pedal 48a and of the brake pedal 49a.

In various embodiments, the first zone controller 40a and the second zone controller 40b may also be coupled to other zone controllers provided in the vehicle, and with the central control unit 100 by means of the vehicle network 30.

Accordingly, in an exemplary scenario wherein the microcontroller 41 of the first zone controller 40a is out of service, the second zone controller 40b is able to read data from the sensors 47, the throttle pedal 48, and the brake pedal 49 which are physically coupled to the first zone controller 40a. In fact, the microcontroller 41 of the second zone controller 40b can obtain readings from such sensors by means of the master control unit 42 to which is coupled. The master control unit 42 in turn is coupled to the slave control unit 43 of the first zone controller 40a by means of the serial bus 32b, the slave control unit 43 being coupled to the analog to digital converter 44, coupled in turn to the sensors 47, the secondary throttle pedal sensor 48b, and the secondary brake pedal sensor 49b. Since the microcontroller 41 of the second zone controller 40b can read sensor data from the first zone controller 40a, the loads 76 and the stop lamps 79 are driven accordingly by means of the driving circuit 78, which is controlled by the microcontroller 41 of the second zone controller 40b. In particular, the microcontroller 41 of the second zone controller 40b may output an analog driving signal to the driving circuit 78 through a digital to analog converter, which may be integrated in the microcontroller 41.

In a different scenario, wherein the microcontroller 41 of the second zone controller 40b is out of service, the first zone controller 40a is able to drive the loads 76 and the stop lamps 79 which are physically coupled to the second zone controller 40b. In fact, the microcontroller 41 of the first zone controller 40a can obtain sensor readings from the sensors 47, the throttle pedal 48, and the brake pedal 49, in particular from the secondary throttle pedal sensor 48b and from the secondary brake pedal sensor 49b, through the data acquisition circuit 44, and send a driving signal to the coupled master control unit 42 which is coupled to the slave control unit 43 of the second zone controller 40b by means of the serial bus 32a. Accordingly, the driving signal is received by the fail-safe driver 75, which is coupled to the loads 76 and the brake lights 79.

Summarizing, the two zone controllers are coupled each other by means of serial buses 32, in addition to the standard vehicle network 30. The first zone controller 40a may actuate loads on the second zone controller 40b based on its own data, by means of the serial bus 32a, which is coupled to a master control unit 42 on the first zone controller 40a, driven by the microcontroller 41 of the first zone controller 40a, and coupled to a slave control unit 43 on the second zone controller 40b which is functionally dependent on the first zone controller 40a. On the opposite direction, the second zone controller 40b may read sensors on the first zone controller 40a, by means of its own master control unit 42, connected by means of a serial bus 32b to a slave control unit 43 on the first zone controller 40a, which is functionally dependent from the second zone controller 40b.

In other words, a slave controller 43 provided in a second zone controller 40b and coupled to a respective master controller 42 provided in a first zone controller 40a acts as a detached portion of the first zone controller 40a, through which the microcontroller 41 of the first zone controller 40a can control other external peripherals.

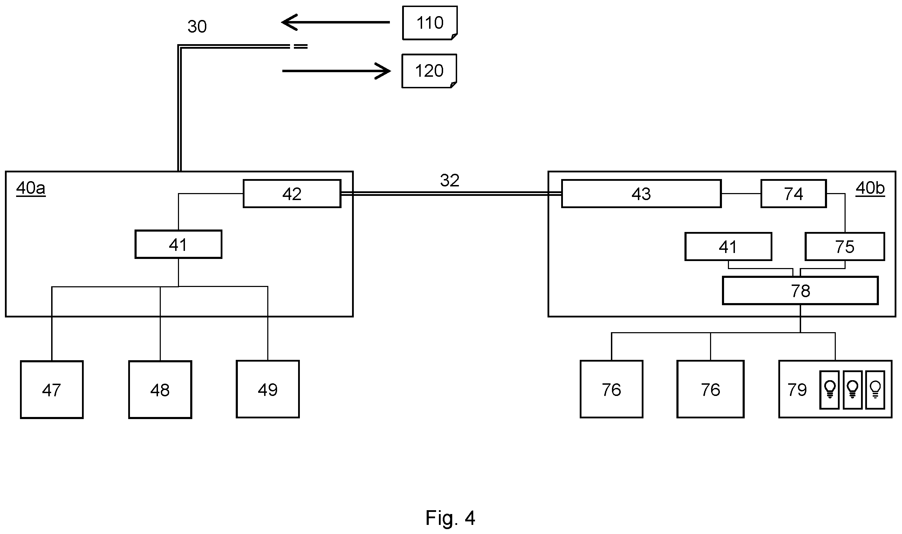

In Figure 4 an exemplary embodiment of the solution here described is shown, in which the serial remote IO architecture is employed to drive the loads 76 and the brake lamps 79 coupled to the second zone controller 40b on the basis of sensor data received at the first zone controller 40a from the vehicle network 30. As illustrated, the first zone controller 40a exchanges sensor data through the vehicle network 30, receiving sensor data 110 originating from other zone controllers provided in the vehicle E/E architecture, and sharing sensor data 120 originating from the sensors 47, the throttle pedal 48 or the brake pedal 49 to the other controllers coupled to the vehicle network 30. In particular, such sensor data 110 received by the first zone controller 40a may originate from a further zone control unit 40 provided in the vehicle, or alternatively from the central control unit 100.

Accordingly, the sensor data 110 is processed by the microcontroller 41 which generates a driving signal. At this point, the driving signal generated by the microcontroller 41 is sent to the master control unit 42 which transmits the driving signal to the slave control unit 43 located at second zone controller 40b through the serial bus 32. Subsequently, the slave control unit 43 forwards the received signal to the digital to analog converter 74 which, subsequently outputs an analog signal to the fail-safe circuit 75, which finally drives the loads 76 and/or the stop lamps 79 through the driver 78.

Specifically, as shown in the example, the first zone controller 40a is able to send data i.e., the sensor readings 110, to the second zone controller 40b by using only the serial bus 32, its microcontroller 41 and the respective master controller 42 and slave controller 43, without resorting to the vehicle network 30 for exchanging data between the first and the second zone controllers.

Accordingly, in a scenario where the microcontroller 41 of the second zone controller 40b is out of service, the loads 76, and in particular the stop lamps 79 can be actioned without the need of any intervention from the microcontroller 41 of the second zone controller 40b, thanks to the implementation of the serial IO illustrated.

Summarizing, in such example the sensor data 120 received from the vehicle network 30 provided by other zone controllers 40 coupled to the vehicle network 30 is forwarded to the second zone controller 40b by means of the serial bus 32, coupled to the master control unit 42 of the first zone controller 40a and to the slave control unit 43 of the second zone controller 40b. Similarly, the sensor data 110 is read from the sensors 47, the throttle pedal 48, and the brake pedal 49, then is forwarded through the vehicle network 30 to the other zone controllers 40 coupled to the vehicle network 30.

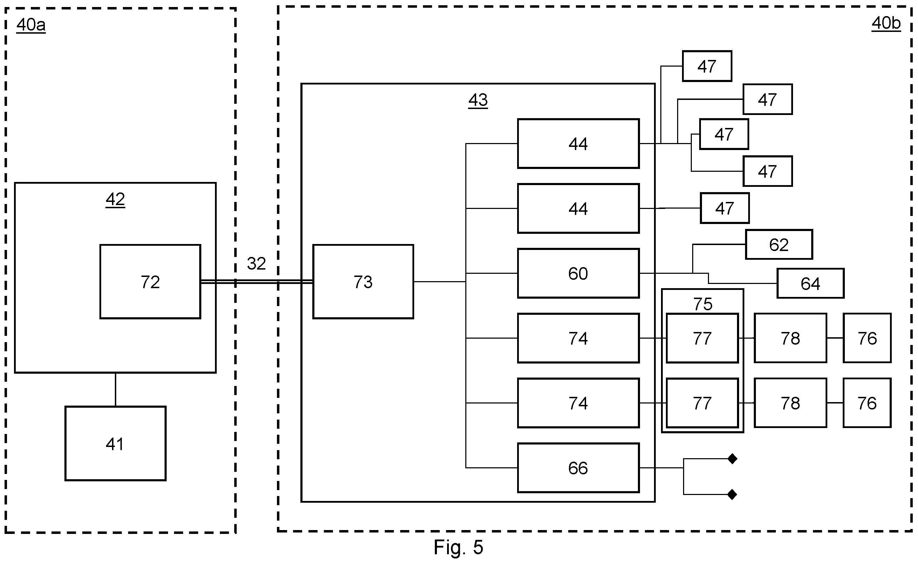

In Figure 5 a detailed schematic of the master control unit 42 provided in a first zone controller 40a and the slave control unit 43 provided in a second zone controller 40b is illustrated. As shown, the master control unit 42 is coupled to the microcontroller 41 of the first zone controller 40a and comprises a master transceiver 72. On the other side, the slave control unit 43 is not coupled to the microcontroller 41 of the second zone controller 40b and similarly comprises a slave transceiver 73. As shown in the previous examples the master control unit 42 and the slave control unit 43 are coupled through a serial bus 32. In particular, in such communication link the slave transceiver 73 can transmit or receive data only when the master transceiver 72 sends a corresponding instruction so, in general, the slave control unit 43 must receive an instruction, or command, from the master control unit 42 in order to perform a given operation, such as reading data from a sensor 47 or asserting a driving signal of an actuator 76. Conversely, the master control unit 42 determines the operations to carry out through the serial IO link, in particular additional serial IO link as mentioned, in particular connection, on the basis of the requests that receives from the coupled microcontroller 41.

As illustrated, in various embodiments the slave control unit 43 is coupled to one or more ADCs 44 that can be coupled to a plurality of sensors 47, and to one or more DACs 74. In particular, embodiments of the present solution are possible either with the ADCs 44 and the DACs 74 provided on the same chip or die of the slave transceiver 73, or with the ADCs 44 and the DACs 74 provided in a separate die or package with respect to the slave transceiver 73.

As discussed in the previous examples, the DACs 74 can be employed for driving loads 76 coupled to the slave control unit 43. In fact, the DACs 74 can be coupled to the fail-safe circuit 75. In turn, the fail-safe circuit 75 receives the analog signals produced by the DACs 74 and sends a driving signal to the driving circuit 78, which drives the load 76 accordingly. In particular, the fail-safe circuit 75 may comprise one or more comparators 77.

With reference to Figure 5, one brake pedal sensor, e.g. 49a, is acquired from the first zone controller 40a, in particular by the microcontroller 41, while the other sensor, e.g. 49b, is lost due to the unavailability of the second zone controller 40b. However, the first zone controller 40a is able to drive the DAC circuit 74 in the second zone controller 40b through the Serial IO link 32 to replicate an analog value associated to the brake pedal pressure, which is then used by the fail-safe circuit 75, by means of an analog comparator 77 which then trigger the driving circuit 78 to switch on the load, e.g., brake lamp, 76.

In various embodiments, the slave control unit 43 further comprises a plurality of input and output ports 60. In particular, the IO ports 60 comprise a power port 62 through which the slave control unit 43 can receive electrical power, and a digital output port 64 through which the slave control unit 43, under the control of the corresponding master control unit 42, can produce as output digital signals. For example, the power port 62 may be coupled to a power supply rail, and the digital output port 64 may be coupled to a further control unit or to a diagnostic device.

Furthermore, the slave control unit 43 may comprise other interfaces 66 such as, for example, a SPI interface or an AXI interface.

In various embodiments, the master control unit 42 and the slave control unit 43 may comprise a microcontroller for performing logical operations or, in alternative, other logic circuits such as a combinational or sequential digital logic or a finite state machine, without involving a dedicated microcontroller. Accordingly, the logic circuitry of the master control unit 42 and the slave control unit 43 may be coupled to a volatile memory, such as a Static Random Access Memory, SRAM, and to a non-volatile memory, such as a flash memory or an EEPROM (Electrically Erasable Programmable Read-Only Memory).

Summarizing, this architecture allows to satisfy safety critical and mission critical requirements. Sensors 47 such as the throttle pedal 48 and the brake pedal 49, provide respectively two separate and redundant sensors 48a and 48b, and 49 and 49b. In particular, the pairs of redundant sensors are respectively connected to the microcontroller 41 of the zone controller 40 of the zone where such sensors are provided, and to the ADC 44 coupled to the slave control unit 43, in such a way that further zone controllers 40 can access the values provided by such sensors. For instance, the pedals 48 and 49 may be associated to the first zone controller 40a, which could be positioned in the front zone of the vehicle, but the reading of the throttle pedal 48 and the brake pedal 49 may be directly managed by the second zone controller 40b through the Serial IO, in particular by means of the slave control unit 43 coupled to the ADC 44. Data acquired by the first zone controller 40a and the second zone controller 40b is then exchanged through the vehicle network 30, in such a way that every zone controller may elaborate data and take decisions based on all the available sensors.

Without the configurations involving the serial IO discussed, in case of loss or degradation of main computation power of one zone controller microcontroller 41, such as the microcontroller 41 of the first zone controller 40a, the sensor readings would be immediately lost as well as the capacity of elaboration and driving the output from the first zone controller 40a. However, thanks to the addition of a Serial IO link in accordance with the present solution, the sensors 47 can still be read independently by the second zone controller 40b, which is also capable to share the readings with the other zone controllers 40 through the vehicle network 30. Thus, the remaining zone controllers are capable of controlling the required outputs in this kind of scenarios.

In the opposite, when the main computation power is lost at the second zone controller 40b, it is still possible to directly drive loads directly associated to the second zone controller 40b from the first zone controller 40a through the present Serial-IO architecture. For example, if one brake pedal sensor 49a is acquired from the first zone controller 40a, in particular by means of the respective microcontroller 41, while the other sensor 49b is lost due to the unavailability of the second zone controller 40b, the first zone controller 40a is able to drive the DAC circuit 74 of the second zone controller 40b through the Serial IO to replicate an analog value associated to the brake pedal 49 pressure, which is then processed by the fail-safe circuit 75, by means of an analog comparator 77, for triggering the driver 78 to activate the stop lamps 79.

In general, whatever vehicle topology the Serial-IO method is used for, the master control unit 42 is always functionally operating based on the instructions e.g., data read/write requests, received by the microcontroller 41 of its respective zone controller 40, whereas the slave control unit 43 operates totally independently from the microcontroller 41 of its zone and only operates based on the instructions received by the master control unit 42 it is coupled to. Thus, all the operation on the modules controlled by the zone controller, sensors 47, loads and actuators 76, or any other input peripheral, which are then specifically coupled to the slave control unit 43 are managed by the respective master control unit 42 coupled thereto. Of course, as shown in Figure 3, such modules controlled by the zone controller, e.g., 40b, i.e., sensors 47, loads and actuators 76, or any other input peripheral, are managed by the respective microcontroller 41, when it is operating.

In view of the above, further embodiments of the present solution concerning different topologies obtainable with the serial IO links are described in the foregoing. Of course, the following exemplary embodiments are discussed to provide a deeper understanding of the solution here described and are not intended to limit other possible configurations not described herein.

In the following the different zone controllers will be indicated with the captions 40a, 40b, 40c, and 40d according to the number of zone controllers in an embodiment, however for simplicity their captions will be not varied if their internal structure e.g., if they include a master unit only, a slave unit, or both, is different, e.g. a first zone controller 40a is not indicated with a different caption if includes a master unit only, a slave unit, or both.

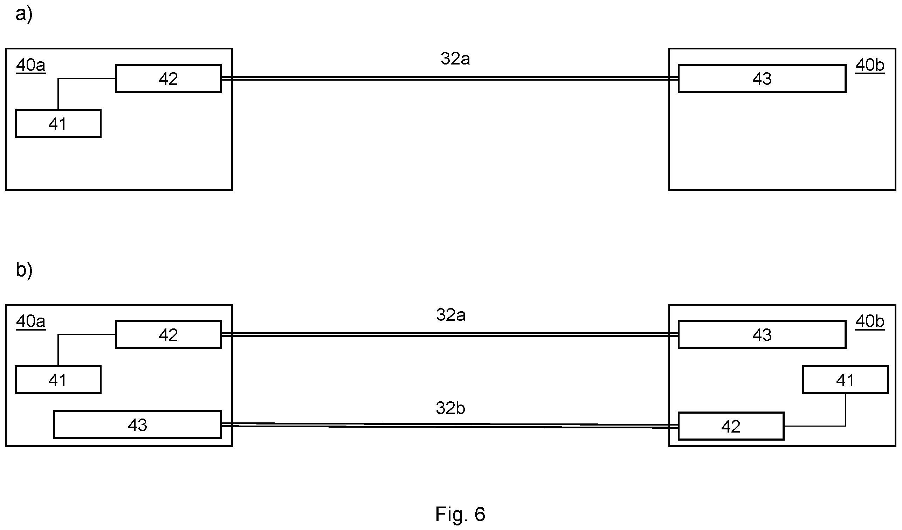

In Figure 6a an exemplary embodiment of the present solution is illustrated. In particular, a first zone controller 40a is coupled through a serial bus 32a to a second zone controller 40b. In accordance with the present solution, the first zone controller 40a comprises a microcontroller 41 coupled to a master control unit 42, the second zone controller 40b comprises a slave control unit 43.

Specifically, the master control unit 42 of the first zone controller 40a is coupled through the serial bus 32a to the slave control unit 43 of the second zone controller 40b.

In the embodiment considered, the architecture shown can be employed for allowing the exchange of data in one direction between the first zone controller 40a and the second zone controller 40b i.e., the first zone controller 40a can access the controlled modules, or peripherals, by sending instructions directed reading and writing data, coupled to the second zone controller 40b, but the opposite is not feasible since the second zone controller 40b does not comprise a master control unit coupled to a respective slave control unit provided in the first zone controller 40a and thus the second control unit 40b cannot generate read or write requests directed to the first zone controller 40a. The second zone controller 40b also includes a microcontroller but since it is not connected to the serial IO as there is only one in a single direction, it is not represented in the figure

In Figure 6b a first zone controller 40a is described coupled to a second zone controller 40b through two serial buses 32a and 32b, the first zone controller 40a comprising the microcontroller 41 coupled to a master control unit 42 and a slave control unit 43, and similarly the second zone controller 40b comprises the microcontroller 41 coupled to a master control unit 42 and a slave control unit 43.

The master control unit 42 of the first zone controller 40a is coupled through the serial bus 32a to the slave control unit 43 of the second zone controller 40b, and the master control unit 42 of the second zone controller 40b is coupled to the slave control unit 43 of the first zone controller 40a through the serial bus 32b.

Conversely, the first zone controller 40a and the second zone controller 40b can exchange data in two directions, in fact the first zone controller 40a has its master control unit 42 coupled to the respective slave control unit 43 provided in the second control unit 40b, and similarly the second control unit 40b has the master control unit 42 coupled to the respective slave control unit 43 provided in the first control unit 40a. Thus, in such configuration the first zone controller 40a can access the peripherals coupled to the second zone controller 40b, and the second zone controller 40b can access the peripherals coupled to the first zone controller 40a. Of course, having the first zone controller 40a and the second zone controller 40d coupled in both directions allows for a greater robustness of the system, with an increase the complexity of the wiring harness.

Summarizing, in the example of Figure 6a the first zone controller 40a can access the peripherals of the second zone controller 40b, but the second zone controller 40b cannot access the peripherals of the first zone controller 40a, whereas in Figure 6b the first zone controller 40a can access the peripherals of the second zone controller 40b, and the second zone controller 40b can access the peripherals of the first zone controller 40a.

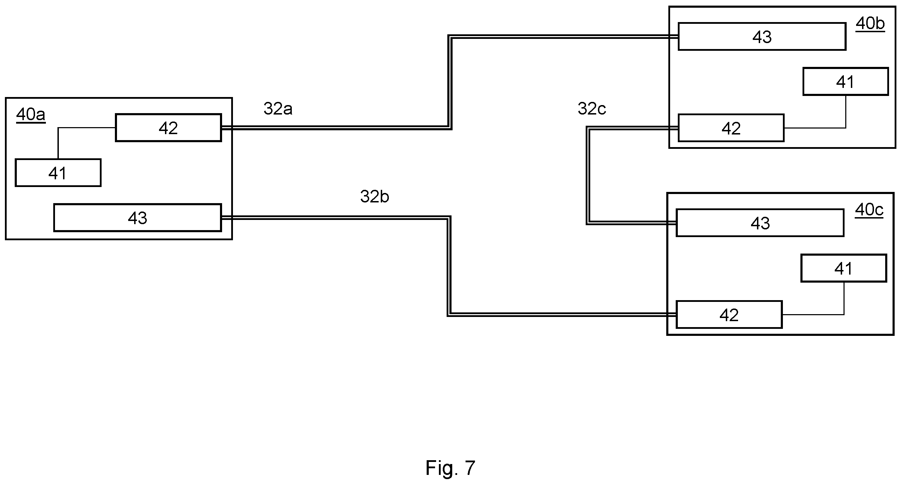

In Figure 7 a further exemplary embodiment of the present solution is illustrated.

In particular, the pictured configuration comprises a first zone controller 40a, a second zone controller 40b, and a third zone controller 40c. As illustrated, the first zone controller 40a is coupled to the second zone controller 40b and to the third zone controller 40c, respectively through a serial bus 32a and a serial bus 32b. Additionally, the second zone controller 40b is coupled to the third zone controller 40c through a serial bus 32c.

In accordance with the present solution, the first, second, and third zone controllers 40a, 40b, and 40c comprise respective microcontrollers 41 coupled to respective master control units 42. The zone controllers 40a, 40b and 40c also comprise respective slave control units 43.

In the embodiment considered, the architecture shown can be employed for allowing the exchange of data between the zone controllers in one direction. In fact, the first zone controller 40a can access, by reading and/or writing data, the resources of the second zone controller 40b which, on its turn, can access the resources of the third zone controller 40c. Finally, the third zone controller 40c can access the resources of the first zone controller 40a.

In particular, while the above relations are valid, none of the three zone controllers considered in this example can couple to the other adjacent zone controller by means of the serial IO i.e., the first zone controller 40a cannot access the resources of the third zone controller 40c, the second zone controller 40b cannot access the resources of the first zone controller 40a, and the third zone controller 40c cannot access the resources of the second zone controller 40b. In other words, in this example the zone controllers are coupled with each other in a fashion similar to a ring network topology, thus each zone controller can access only one adjacent zone controller.

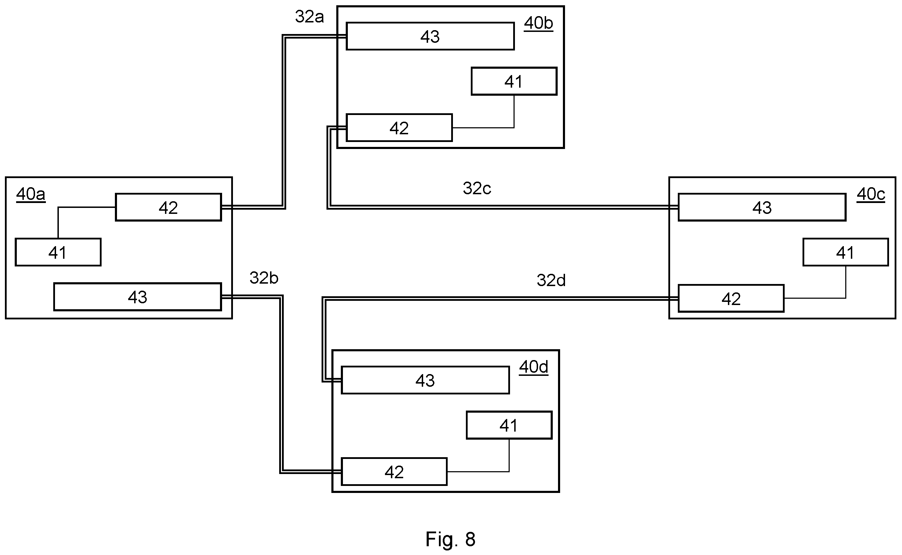

In Figure 8 is illustrated a similar ring configuration comprising four zone controllers coupled in a ring network. As discussed previously, the cascading, i.e., (daisy) chain-linked, redundant serial IO links form a ring network. In particular, the first zone controller 40a is coupled to the second zone controller 40b and to the fourth zone controller 40d, respectively through a serial bus 32a and a serial bus 32b. In turn, the second zone controller 40b is coupled to the third zone controller 40c through a serial bus 32c, and the third zone controller 40c is coupled to the fourth zone controller 40d through a serial bus 32d.

Specifically, the master control unit 42 of the first zone controller 40a is coupled to the slave control unit 43 of the second zone controller 40b, the master control unit 42 of the second zone controller 40b is coupled to the slave control unit 43 of the third zone controller 40c, the master control unit 42 of the third zone controller 40c is coupled to the slave control unit 43 of the fourth zone controller 40d, and the master control unit 42 of the fourth zone controller 40d is coupled to the slave control unit 43 of the first zone controller 40a.

As discussed above, also in this example the zone controllers are interconnected through redundant serial IO connections or links in such a way to form a ring network. Once again, the exchange of data can take place only in one direction due to the fact that each zone controller has only one master control unit 42 and one slave control unit 43, in fact each zone controller 40 can access only one neighboring zone controller. Specifically, the first zone controller 40a can have access only to the resources of the second zone controller 40b, the second zone controller 40b can only access the resources of the third zone controller 40c, the third zone controller 40c can only access the resources of the fourth zone controller 40d, and finally the fourth zone controller 40d can only access the resources of the first zone controller 40a. Thus, exchanging data in the opposite direction e.g., from the first zone controller 40a to the fourth zone controller 40d, is not possible in the configuration shown. For instance, a bi-directional communication would be made possible by implementing a similar network topology and providing each zone controller with two master control units 42 and two slave control units 43, in order to couple one master control unit 42 to the slave control unit 43 of its next neighbor e.g., to couple the first zone controller 40a to the second zone controller 40b, and to couple the other master control unit 42 to the slave control unit 43 of its previous neighbor e.g., to couple the first zone controller 40a to the fourth zone controller 40d.

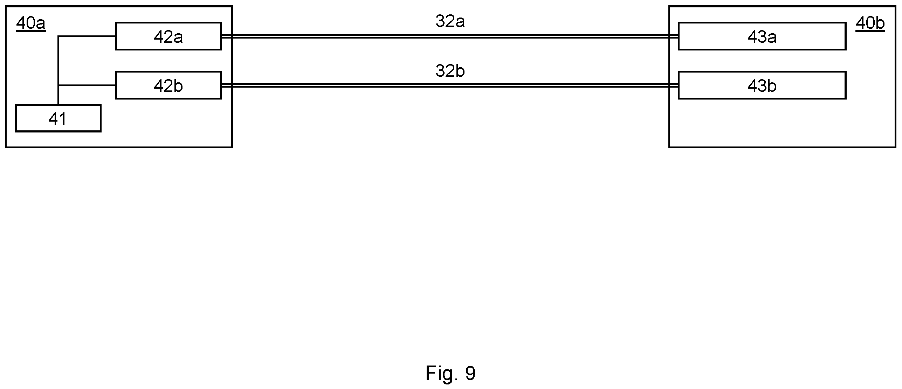

In Figure 9 is illustrated a further embodiment of the present solution, featuring a one-directional link between a first zone controller 40a towards a second zone controller 40b. As shown, the first zone controller 40a is coupled to the second zone controller 40b by means of two serial buses 32a and 32b, coupling the master control units 42a and 42b of the first zone controller 40a to respective slave control units 43a and 43b of the second zone controller 40b.

In particular, the two master control units 42a and 42b are coupled to the microcontroller 41 of the first zone controller 40a and are configured to receive instructions from it. The slave control units 43a and 43b provided in the second zone controller 40b may be coupled to the same peripherals i.e., sensors 47 and/or actuators 76, or may be coupled to different peripherals of the second zone controller 40b. Since the serial IO links have the same direction, data read or write requests can only be generated by the first zone controller 40a towards the second zone controller 40b, whereas the opposite is not possible with the configuration illustrated.

Of course, if needed, e.g. for bandwidth reasons, there can be more than two master units in the first zone controller and correspondingly more than two slave units.

The configuration shown may be employed to achieve a higher bandwidth thanks to the double serial IO link, which are added to the vehicle network, in order to satisfy eventual design requirements, or in alternative to provide an even safer linking by sending the same data over the serial IO links twice. Of course, also these enhancements come with the drawback of a more complex cable harness, which however would be still simpler than a corresponding wiring harness of a traditional decentralized E/E architecture.

In order to achieve the increased bandwidth with the configuration considered, both the master control unit 42 and the slave control unit 43 shall include a buffer coupled to a data segmentation circuit for segmenting and reconstructing the data sent and received over the serial buses 32a and 32b.

Conversely, in order to achieve the higher safety by configuring the buses 32a and 32b as redundant communication channels, the master control unit 42 and the slave control unit 43 shall include an error detection circuit, for instance configured to check whether two or more symbols received respectively from the bus 32a and the bus 32b are different, and in the affirmative case drop the symbols and ask the master control unit 42 for a retransmission.

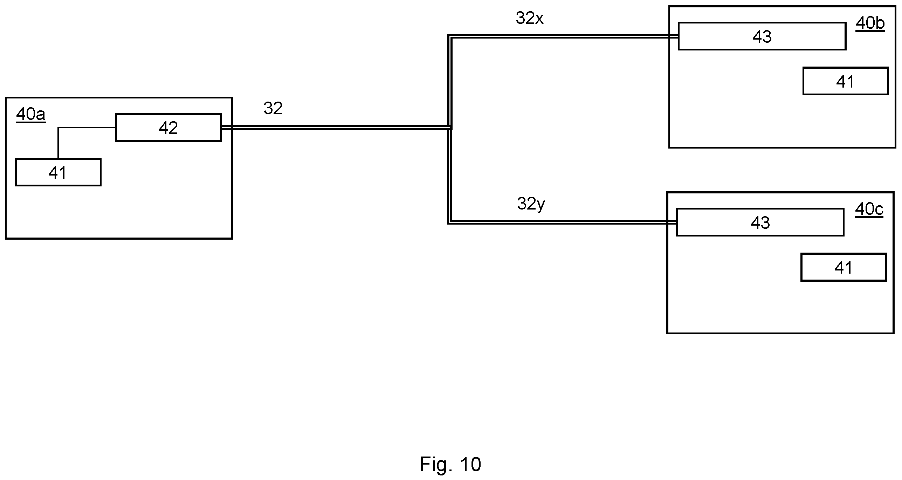

In Figure 10 is shown an exemplary embodiment of the present solution featuring a first zone controller 40a coupled to a second zone controller 40b and to a third zone controller 40c by means of a duplexed serial bus 32.

As illustrated, the first zone controller 40a comprises a microcontroller 41 coupled to a master control unit 42. The master control unit 42 is coupled to a slave control unit 43 provided in the second zone controller 40b, and to a slave control unit 43 provided in the third zone controller 40c. In particular, the coupling between the master control unit 42 and the two slave control units 43 is achieved by means of the serial bus 32, which is split to obtain two branches, a first branch 32x received by the second zone controller 40b, and a second branch 32y received by the third zone controller 40c. Thus, both the slave control units 43 receive the same data transmitted from the first zone controller 40a through the branches 32x and 32y.

In order to address the requested zone controller correctly, the master control unit 42 may include in the data read/write requests an address identifying the desired slave control unit 43.

For example, in the case in which the microcontrollers 41 of both the second and third zone controllers 40b and 40c are disabled due to a malfunction, the first zone controller 40a may access the resources of the other two zone controllers by means of the duplexed serial IO link. Specifically, whenever the first zone controller 40a requires to access resources linked to the second zone controller 40b, the master control unit 42 should include in the data read/write request an address indicating that the desired recipient of the data read/write request is the second zone controller 40b. In a similar way, in order to access the resources linked to the third zone controller 40c, the data read/write request generated by the master control unit 42 should include an address indicating that the desired recipient of the request is the third control unit 40c.

Accordingly, the slave control units 43 of both the second and third zone controllers 40b and 40c are configured to verify whether the received data read/write requests are directed to the respective zone controller or not. In case the received data read/write request is directed to the respective zone controller 40, the slave control unit 43 executes the request subsequently. On the contrary, if the slave control unit 43 receives a data read/write request which is directed to another zone controller, the slave control unit 43 discards the request.

The operations of adding an address to the data read/write request and of verifying whether the received data read/write request is directed to the interested zone controller may be performed by means of the logic circuitry provided in the master control unit 42 and the slave control unit 43 respectively. For example, such operations may be performed by means of a microcontroller provided in both the master control unit 42 and the slave control unit 43, or by means of registers coupled to programmable logic devices, look-up tables, or finite state machines. Of course, with the addressing technique here described it is possible to couple even more slave control units 43 to a single master control unit 42 by adopting properly dimensioned clocks, symbol durations and symbol rates.

Thus, from the embodiments described with reference to Figure 6 to 10 is clear that each zone controller 40 may comprise, in addition to the microcontroller 41 a master control unit 42 and a slave control unit 43. In embodiments however one or more zone controllers 40 may comprise in addition to the microcontroller 41 either a master control unit 42 or a slave control unit 43.

Thus, the solution refers to a control system for a vehicle comprising a vehicle network 30 which is configured to exchange data with a plurality of zone controllers e.g., 40a and 40b, configured to control respective modules, in particular sensors 47 and/or actuators 76, operating in respective zones of said vehicle. In particular, each zone controller 40 comprises a microcontroller 41, a master control unit 42, and/or a slave control unit 43.

Specifically, in the solution considered at least a first zone controller 40a in said plurality of zone controllers e.g., 40a and 40b, comprises a respective master control unit 42 coupled by means of a communication link, in particular a serial bus 32, to a slave control unit 43 of a second zone controller 40b in said plurality of zone controllers 40a, 40b, and it is configured to send instructions from said first zone controller 40a, in particular data read/write requests, to said second zone controller 40b on said communication link, in particular serial bus, 32, wherein the second zone controller 40b is configured to receive and execute said instructions, such as data read/write requests, by means of the respective slave control unit 43.

Thus, on the basis of the description above, the advantages of the solution there described are clear.

In particular the solution described, by using this kind of architecture, allows to further reduce the complexity of the wiring harness, with the trade-off of reducing the available bandwidth. Thus, for example if a designer requires a light wiring harness due to some technical constraints, it may decide to employ a solution having more than one slave control unit, e.g., 43 coupled to one master control unit, e.g., 42 as the one pictured in Figure 10. Conversely, if the designer requires an increased bandwidth, it may decide to adopt a solution having more than one master control unit 42 and more than one slave control unit 43 for each zone controller as the one pictured in Figure 9.

Of course, without prejudice to the principle of the solution, the details of construction and the embodiments may vary widely with respect to what has been described and illustrated herein purely by way of example, without thereby departing from the scope of the present solution, as defined by the ensuing claims.

## Claims

1. A control system for a vehicle comprising a vehicle network (30) which is configured to exchange data with a plurality of zone controllers (40a, 40b) configured to control respective modules, in particular sensors (47) and/or actuators (76), operating in respective zones of said vehicle, wherein each zone controller (40) comprises:
- a microcontroller (41),
- a master control unit (42), and/or
- a slave control unit (43),
wherein at least a first zone controller (40a) in said plurality of zone controllers (40a, 40b) comprises a respective master control unit (42) coupled by means of a communication link, in particular a serial bus (32), to a slave control unit (43) of a second zone controller (40b) in said plurality of zone controllers (40a, 40b), and it is configured to send instructions from said first zone controller (40a), in particular data read/write requests, to said second zone controller (40b) on said communication link, in particular serial bus, (32), wherein the second zone controller (40b) is configured to receive and execute said instructions, in particular data read/write requests, by means of the respective slave control unit (43).

2. The control system of Claim 1, comprising a central controller (100) coupled to said vehicle network (30), and wherein each zone controller (40) is coupled to said vehicle network (30) and is configured to transmit and receive data over said vehicle network (30), the central controller (100) being configured to manage the exchange of data between said zone controllers (40).

3. The control system of Claim 2, wherein said first zone controller (40a), upon detecting that the microcontroller (41) of the second zone controller (40b) is malfunctioning, is configured to send instructions to said second zone controller (40b).

4. The control system of Claim 3, wherein each slave control unit (43) comprises:
- one or more analog-to-digital converters (44), and/or
- one or more digital-to-analog converters (74), and/or
- one or more driving circuits (78).

5. The control system of Claim 4, wherein each zone controller (40) is coupled to one or more sensors (47) and/or to one or more actuators (76), said one or more analog-to-digital converters (44) reading values from the one or more sensors (47), and said one or more digital-to-analog converters (74) sending signals to the one or more actuators (76).

6. The control system of Claim 1, wherein said master control unit (42) and said slave control unit (43) respectively comprise a master transceiver (72) and a slave transceiver (73), the master transceiver (72) and the slave transceiver (73) being coupled to said communication link, in particular serial bus (32), and being configured to receive and transmit data over said communication link, in particular serial bus (32).

7. The control system of any of the preceding claims, wherein one or more zone controllers (40) are linked to the first zone controller (40a) and to the second zone controller (40b) by means of further serial buses (32) linking respective master control units (42) to corresponding slave control units (43).

8. The control system of any of Claims 1 to 6, wherein said first zone controller (40a) comprises a plurality, in particular a pair, of master control units (42a, 42b) respectively coupled to corresponding slave control units (43a, 43b) provided in said second zone controller (40b) by means of respective serial buses (32a, 32b).

9. The control system of any of Claims 1 to 7, further comprising at least a third zone controller (40c) having a slave control unit (43), the communication link, in particular serial bus (32), being split in two branches (32x, 32y) respectively coupled to the slave control unit (43) of the second zone controller (40b) and to the slave control unit (43) of the third zone controller (40c).

10. The control system of any of Claims 1 to 7, wherein one or more zone controllers (40a) in said plurality comprises a master control unit (42) and a slave control unit (43).

11. The control system of any of the previous claims, wherein upon a malfunctioning of the microcontroller (41) of the second zone controller (40b), said at least a first zone controller (40a) in said plurality of zone controllers (40a, 40b) being configured to perform said sending instructions, in particular data read/write requests, from said first zone controller (40a) to the second zone controller (40b).

12. A method for controlling modules in a vehicle comprising a vehicle network (30) exchanging data with a plurality of zone controllers (40a, 40b) configured to control respective modules, in particular sensors and/or actuators, operating in respective zones of said vehicle, each zone controller (40) comprising:
- a microcontroller (41),
- a master control unit (42), and/or
- a slave control unit (43),
comprising sending instructions from said first zone controller (40a), in particular data read/write requests, to a second zone controller (40b) in said plurality of zone controllers (40a, 40b) through a respective master control unit (42) coupled by means of a serial bus (32) to a slave control unit (43) of a second zone controller (40b) in said plurality of zone controllers (40a, 40b).

13. The method of Claim 12, comprising linking one or more zone controllers (40) to the first zone controller (40a) and to the second zone controller (40b), in particular by means of further serial buses (32) linking respective master control units (42) to corresponding slave control units (43).

14. The method of any of Claims 12 or 13, comprising coupling said first zone controller (40a) by a plurality, in particular a pair, of master control units (42a, 42b) to corresponding slave control units (43a, 43b) provided in said second zone controller (40b), in particular by means of respective serial buses (32a, 32b).

15. The method of any of Claims 12 to 14, further comprising providing at least a third zone controller (40c) having a slave control unit (43), providing the communication link, in particular serial bus (32), split in two branches (32x, 32y) respectively coupled to the slave control unit (43) of the second zone controller (40b) and to the slave control unit (43) of the third zone controller (40c).

16. The method of any of Claims 12 to 15, comprising providing one or more zone controller (40a) in said plurality with a master control unit (42) and a slave control unit (43).

17. The method of any of Claims 12 to 15, wherein upon detecting that the microcontroller (41) of the second zone controller (40b) is malfunctioning, is performed said sending instructions, in particular data read/write requests, from said first zone controller (40a) to the second zone controller (40b).
